# EUROPEAN PATENT APPLICATION

(11) **EP 1 997 624 A2**
(43) Date of publication of application: **03.12.2008**
(21) Application number: 08154380.3
(22) Date of filing: 11.04.2008
(51) Int. Cl.: B32B 27/00

(54) **A multi-layered polarizing sheet, and a non-glaring product and a polarizing sheet for a liquid-crystal display comprising the polarizing sheet**

(30) Priority: 13.04.2007 JP 2007106002
(71) Applicant: MGC Filsheet Co., Ltd., Tokorozawa-city, Saitama 359-1164 (JP)
(72) Inventor: Chida, Hiroyuki, Tokorozawa Saitama 359-1164 (JP); Tanoho, Kazutoshi, Tokorozawa Saitama 359-1164 (JP); Takakuwa, Kyohei, Tokorozawa Saitama 359-1164 (JP); Kurata, Kenichi, Tokorozawa Saitama 359-1164 (JP); Namiki, Masahiko, Tokorozawa Saitama 359-1164 (JP); Hirata, Masukazu, Tokorozawa Saitama 359-1164 (JP)
(74) Representative: Barth, Stephan Manuel

(57) **Abstract**

[Problem to be solved]

The present inventions provide a polarizing film and a polarizing sheet of which the resistance for the response in the vertical direction against the direction for the extension.

[Means to solve the problem]

In a multi-layered polarizing sheet comprising a laminated body in which a polarizing layer consisting of a polarizing film is held between two transparent plastic materials and is adhered to them, the polarizing layer is produced by dyeing a film made of poly(vinyl alcohol) and the like having a weight average molecular weight of 150,000 - 500, 000 and by extending it. The non-glaring product and polarizing sheet for a liquid crystal display are produced by using the multi-layered polarizing sheet.

## Description

### [Field of the invention]

The present inventions relate to a multi-layered polarizing sheet which is used for sunglasses, goggles, a liquid-crystal display, etc., having a non-glaring property.

### [Background]

For polarizing sheets, one which utilizes a natural mineral, such as calcite, etc., having birefringence, one which possesses a property of polarization obtained by adsorbing or immersing iodine or a dichroic dye on a resin film while it is extended in one direction, etc, are known. In the latter one, a multi-layered polarizing sheet that has a good processability for secondary fabricating, low price and low density is manufactured by using the polarizing film (polarizing layer) which is held between two transparent plastic material layers. In this method for production, poly(vinyl alcohol) and the like are the most suitable for resins used for of the polarizing layer. Polycarbonate resins are the most suitable for resins used for the protecting layer.

When these multi-layered polarizing sheet are used for sunglasses, etc., the steps for producing them include bending, ball-grinding, drilling, thread fastening, etc. During these steps, stresses such as a bending stress, compression, tensile stress, torsion, heterogeneous deformations by changes of temperature and humidity, etc, are added to the polarizing layers. Among these, tensile stress in the vertical direction and opposite the direction for the extension of the polarizing film is particularly problematic. If the resistance of the polarizing film to this stress is low, the film is torn in the direction of the extension. Thereby this results in a reduced yield of the product. If the sheet is used for sunglasses, depending on the shape, it continues to received stresses from the frame and parts where screws are fastened. So, the polarizing film may have a crack during its use.

It is known that these polarizing films formed by using extended PVA films have a tendency to be torn along the direction of the extension. However, a way to counteract this problem has been proposed. Specifically, it is a method for a treatment of adding humidity at a high temperature under an atmosphere of a temperature of 60 - 80 °C and a relative humidity of 80 - 98% after laminating a polarizing film between transparent films (see Patent Reference 1).

[Patent Reference 1] Official Gazette of Japanese Patent Early-publication (*Kokai*) No. H08-119216

### [Disclosure of the invention]

### [Problem to be solved]

However, the above counteraction was not sufficient. So cracks probably occurred. So, a polarizing layer which has a high strength and in which cracks do not occur for a long period has been required.

The present inventions were made considering the above. The problem to be solved is to provide a polarizing sheet of which the resistance to the stress in the vertical direction of the direction of the extension is improved, a non-glaring product which includes the polarizing sheet, and a sheet for a liquid crystal display.

### [Means for solving the problem]

To solve the problem the present inventors studied the molecular weight of a polarizing film which is used for a polarizing layer. Then they found that a polarizing film having a particular molecular weight has a high strength and that cracks do not occur in the film. Based on this finding they made the present inventions. The present inventions provide the following multi-layered polarizing sheet, a non-glaring product which includes the sheet, and a sheet for a liquid crystal display.
[1] A multi-layered polarizing sheet comprising a laminated body in which a polarizing layer consisting of a polarizing film is held between two transparent plastic materials and is adhered to them, wherein the polarizing layer is produced by dyeing a film made of poly(vinyl alcohol) and the like having a weight average molecular weight of 150,000 - 500, 000 and by extending it.
[2] The multi-layered polarizing sheet of [1], wherein the transparent plastic materials are made of polycarbonate.
[3] The multi-layered polarizing sheet of [1] or [2], wherein the film of poly(vinyl alcohol) is extended by 3 - 5 times after dyeing.
[4] The multi-layered polarizing sheet of any one of [1] - [3], wherein the transparent plastic materials and polarizing film are adhered to using a two-liquid type heat-curable polyurethane resin consisting of a polyurethane prepolymer and a curing agent.
[5] A non-glaring product which is produced by using the multi-layered polarizing sheet of any one of [1] - [4].
[6] The non-glaring product of [5] which are sunglasses or goggles.
[7] A polarizing sheet for a liquid-crystal display which is produced by using the multi-layered polarizing sheet of any one of [1] - [4].

### [Effect of the invention]

The ratios of the yield of the production, the radiuses and shapes of lenses, the flexibility of industrial designs, and the climate-resistance of the final products when sunglasses and goggles are produced, are improved by using the multi-layered polarizing sheet of the present inventions.

### [Preferable embodiments of the present inventions]

The present inventions relate to a multi-layered polarizing sheet comprising a laminated body in which a polarizing layer consisting of a polarizing film is held between two transparent plastic materials and is adhered to them.

For a resin as a substrate for a polarizing film, poly(vinyl alcohol) and the like are used. For these poly(vinyl alcohol) and the like, poly(vinyl alcohol) (PVA) and its derivatives or analogs, such as poly(vinyl formal), poly(vinyl acetal), saponificated poly(ethylene-co-vinyl acetate), etc., are preferable. Particularly PVAis preferable. Polarization is provided by extending the substrate in one direction while immersing or adsorbing iodine or a dichroic dye on the substrate.

For a PVA film, one having a molecular weight of 150,000 - 500,000 is used. Particularly, one having a molecular weight of 150,000 - 300,000 is preferable from the viewpoint of having a film with strength and one that can be extended.

The ratio of the extension for a PVA film is 2 - 8 times. It is preferably 3 - 5 times from the viewpoint of the strength after it is extended.

For a transparent plastic material to use for binding a polarizing layer in the present inventions, a polycarbonate resin, an amorphous polyolefin resin, a polyacrylate resin, a polysulfone resin, a triacetyl cellulose resin, a polyester resin, a polyamide resin, etc., can be listed. The polycarbonate resin is preferable from the viewpoint of its properties in mechanical strength.

For the polycarbonate resin, a polymer which is produced by a well-known method from a bisphenol compound represented by 2,2-bis(4-bydroxyphenyl)alkane or 2,2-bis(4-hydroxy-3,5-dihalogenophenyl)alkane is used. The skelton of the polymer may include a structural unit having an ester linkage comprising a structural derived from an aliphatic diol. It is preferably a polycarbonate resin derived from 2,2-bis(4-hydroxyphenyl)propane.

The molecular weight of the polycarbonate resin has no special limitation. It has preferably a viscosity average molecular weight of 17,000 - 40,000 and more preferably 20,000 - 30,000.

The transparent plastic material is 20 µm - 2 mm thick. In particular, when it is processed for a curved surface, it is preferably 50 µm - 1 mm thick.

For a synthetic adherent used for adhering a polarizing layer of the present inventions to a transparent plastic film, an acrylic material, a urethane material, a polyester material, a melamine resin material, an epoxy resin material, a silicone material, etc., can be listed. In particular, a two-liquid-type heat-curable polyurethane resin consisting of a polyurethane prepolymer (a urethane resin material) and a curing agent is preferable from the viewpoint of the adhesiveness to a polycarbonate that is suitable for a transparent plastic material.

### [Examples]

The present inventions are described in detail in the following Examples. But the inventions should not be limited by the descriptions thereof.

### [Example 1]

### (a) Measurement of the molecular weight of PVA

The PVA was measured by gel permeation chromatography, of which the standard substance was polyoxyethylene (POE: 5 species, of which molecular weights are different) and the solvent was water. The average molecular weight was calculated from the relationship between the obtained elution times and strengths. In this calculation, the formula for the conversion from the molecular weight of POE (M_{POE}) to the molecular weight of PVA (M_{PVA}), M_{PVA}=0.456M_{POE}^{1.0854}, was calculated based on the two viscosity formula ([η]=0.0125M^{0.78} for the POE-water system [J.Polym.Sci., 32, 517(1958)] and [η]=0.0453M_{POE}^{0.64} for the PVA-water system [Kobunshi Kagaku, 17, 191(1960)], wherein [η] denotes intrinsic viscosity and M denotes the molecular weight) to establish an curve for adjusters in accord with PVA standards (a formula for the relationship between the elution time and the molecular weight of the PVA). By using this curve, the relationship between the molecular weight and strength (fraction) in each elution time of the PVA, and, further, the average molecular weight, were calculated. However, the peak for the glycerin that was added as a curing agent for the PVA was not included in the calculation.

### (b) Production of a polarizing film

A polyvinyl alcohol [manufactured by Kuraray Co. Ltd., trade name: VF-PS#7500, weight average molecular weight by PVA standards: 163,000 (116,000 by POE standards)] was immersed in water at 35 °C to remove the glycerin included in the film. Subsequently it was immersed for 3 minutes in an aqueous solution with 0.35 g/L of Sumilight Red 4B-P (C.I.28160), 0.18 g/L of Chrysophenine (C.I.24895), 1.33 g/L of Sumilight Supra Blue G (C.I.34200), and 5 g/L of anhydrous sodium sulfate. It was extended four times in one direction during and after dying. This dyed film was immersed at 35 °C for 3 minutes in an aqueous solution with 2.5 g/L of nickel sulfate and 6.6 g/L of boric acid. The film was left at room temperature for three minutes while its tension was maintained, followed by being treated by heat at 110 °C for two minutes, to give a polarizing film.

### (b) Transparent plastic material

A polycarbonate 700 µm thick (manufactured by Mitsubishi Gas Chemical Co., Ltd.) was used as a transparent plastic material.

### (d) Adhesive agent

Twenty five parts by weight of diphenylmethane-4,4'-diisocyanate and 600 parts by weight of ethyl acetate as a solvent relative to 100 parts by weight of a poly(propylene glycol) (molecular weight: 900) were used to prepare a composition of an adhesive agent.

### (e) Preparation of a multi-layered polarizing sheet of the present inventions

An adhesive agent was coated by a coater on one surface of the polarizing film obtained in (b). After the film was dried at 110 °C for five minutes, the polycarbonate film in (c) was laminated on the film by a laminator. Subsequently an adhesive layer was formed on the other side of the polarizing film and a polycarbonate film was then laminated on the layer. Then it was dried at room temperature for 24 hours or more, at 40 °C for 24 hours, and further at 70 °C for 48 hours, to obtain a multi-layered polarizing sheet.

### (f) Test for strength

The polarizing sheet that was obtained was placed in a vacuum drier and dried sufficiently at 120 °C for three hours. It was drilled to form a hole with a diameter of 2 mm. The margin of the hole was observed by using an optical microscope. A sheet of which the polarizing film layer had fine cracks was selected to make a test sample. A screw was passed through the hole of the sample and pressed with a constant torque. It was dried under vacuo for four hours or more. The ratio at which the fine crack grew to be a visible crack was checked. As a result, five out of eighty samples (6%) showed the growth of the crack.

### [Comparative Example 1]

A polarizing film was obtained by the same procedures as in (b) in Example 1, except for using a PVA film having a grade of a lower molecular weight than that of the film used in Example 1 [manufactured by Kuraray Co. Ltd., trade name: VF-P#7500, weight average molecular weight by PVA standard: 113,000 (84,000 by POE standard)]. Subsequently, it was treated by the same procedures as in (c) - (e) in Example 1 to obtain a polarizing sheet. The test for the strength of this polarizing sheet was performed by the same method as in (f) in Example 1. It showed that the growth of the crack was at the ratio of seven in forty samples (18%).

### [Example 2]

A laminated body was produced by the same procedures as in (b) - (e) in Example 1, except for using a polycarbonate film which was 300 µm thick (manufactured by Mitsubishi Gas Chemical Co. Ltd.) as a transparent plastic material. The laminate sample produced was punched to form circles with a diameter of 82 mm each. They were bending-processed to 8R (a spherical radius of 65 mm) by a vacuum former. They were again punched to form circles with a diameter of 75 mm to give samples for an injection test. A melted polycarbonate was injected from the dented side to form a lens. Ten Samples of the lens were made. They were visually observed, and showed no crack in the polarizing layer.

### [Comparative Example 2]

A multi-layered polarizing sheet was made by the same procedures as in Comparative Example 1, except for using a polycarbonate film which was 300 µm thick as a transparent plastic material. Cracks were observed in the polarizing layer in the six of ten samples (60%).

### [Industrial applicability]

The multi-layered polarizing sheet of the present inventions is used for a non-glaring material, such as sunglasses, goggles, etc., a liquid crystal display, etc.

### [Brief explanation of the drawings]

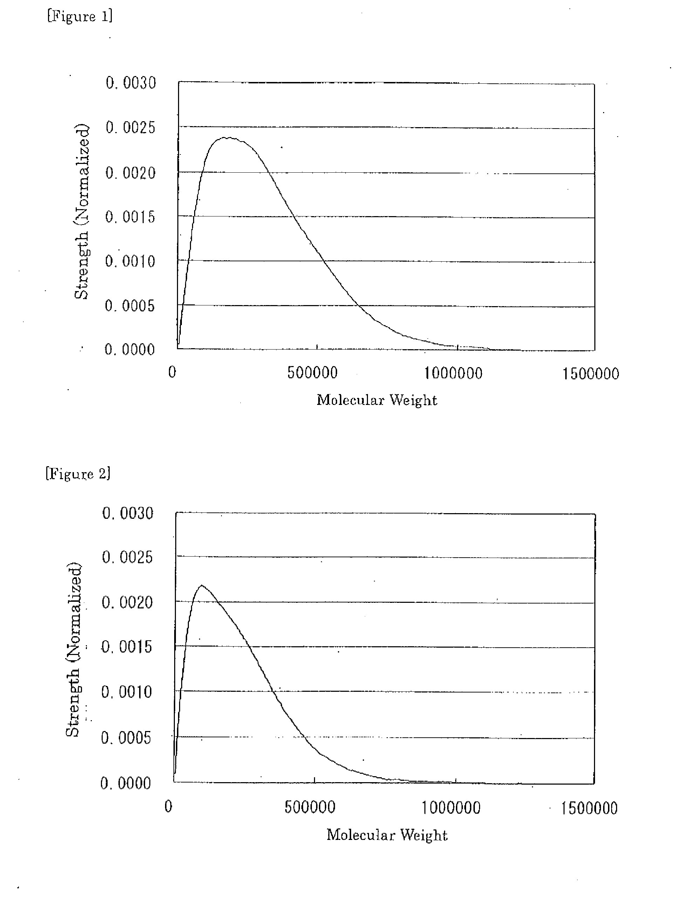

[Figure 1] Figure 1 shows the relationship between the molecular weight and the strength of the PVA used in Example 1.
[Figure 2] Figure 2 shows the relationship between the molecular weight and the strength of the PVA used in Comparative Example 1.

## Claims

1. A multi-layered polarizing sheet comprising a laminated body in which a polarizing layer consisting of a polarizing film is held between two transparent plastic materials and is adhered to them, wherein the polarizing layer is produced by dyeing a film made of a poly(vinyl alcohol) and the like having a weight average molecular weight of 150,000 - 500, 000 and by extending it.

2. The inulti-layered polarizing sheet of claim 1, wherein the transparent plastic materials are made of polycarbonate.

3. The multi-layered polarizing sheet of claim 1 or 2, wherein the film of a poly(vinyl alcohol) is extended by 3 - 5 times after dyeing.

4. The multi-layered polarizing sheet of any one of claims 1 - 3, wherein the transparent plastic materials and polarizing film are adhered to with a two-liquid-type heat-curable polyurethane resin consisting of a polyurethane prepolymer and a curing agent.

5. A non-glaring product which is produced by using the multi-layered polarizing sheet of any one of claims 1-4.

6. The non-glaring product of claim 5 that are sunglasses or goggles.

7. A polarizing sheet for a liquid-crystal display which is produced by using the multi-layered polarizing sheet of any one of claims 1-4.
